# EUROPÄISCHE PATENTSCHRIFT

(11) **EP 3 805 061 B1**
(45) Veröffentlichungstag und Bekanntmachung des Hinweises auf die Patenterteilung: **28.12.2022**
(21) Anmeldenummer: 20192885.0
(22) Anmeldetag: 26.08.2020
(51) Int. Cl.: B60W 10/02, B60W 10/04, B60W 20/40, B60W 30/18, B60K 6/442

(54) **VERFAHREN ZUR STEUERUNG EINER TRENNKUPPLUNG EINES ANTRIEBSAGGREGATS EINES FAHRZEUGS UND/ODER EINER MASCHINE, INSBESONDERE EINES HYBRID-ANTRIEBSSTRANGES EINES KRAFTFAHRZEUGES**
METHOD FOR CONTROLLING A CLUTCH OF A DRIVE UNIT OF A VEHICLE AND/OR A MACHINE, IN PARTICULAR AN HYBRID DRIVE TRAIN OF A MOTOR VEHICLE
PROCÉDÉ DE COMMANDE D'UN EMBRAYAGE D'UN GROUPE D'ENTRAINEMENT D'UN VÉHICULE ET/OU D'UNE MACHINE, EN PARTICULIER D'UNE CHAINE CINÉMATIQUE HYBRIDE D'UN VÉHICULE AUTOMOBILE

(30) Priorität: 27.09.2019 DE 102019214942
(43) Veröffentlichungstag der Anmeldung: 14.04.2021
(73) Patentinhaber: VOLKSWAGEN AG, 38440 Wolfsburg (DE)
(72) Erfinder: Ley, Michael, 39397 Schwanebeck (DE)

(56) Entgegenhaltungen:
- DE-A1- 10 246 839
- DE-A1- 19 823 766
- DE-A1-102008 027 057
- DE-A1-102015 215 905
- DE-A1-102016 201 569
- DE-B4- 19 823 766

## Beschreibung

Die Erfindung betrifft ein Verfahren zur Steuerung einer Trennkupplung eines Antriebsaggregats eines Fahrzeugs und/oder einer Maschine, insbesondere eines Hybrid-Antriebsstranges eines Kraftfahrzeuges, mit den Merkmalen des Oberbegriffes des Patentanspruches 1.

In Fahrzeugen und Maschinen mit Hybridantrieben wird häufig eine nasslaufende Lamellenkupplung als Trennkupplung zur kraftschlüssigen Verbindung einer Verbrennungskraftmaschine mit einem Antriebsaggregat, beispielsweise mit einem Differentialgetriebe, eingesetzt.

In der EP 2 857 243 B1 wird beispielsweise ein derartiges Fahrzeug mit einem Hybrid-Antrieb beschrieben.

In der DE 10 2017 216 392 A1 wird ein Verfahren zur Regelung einer Trennkupplung eines Hybridantriebsaggregats eines Kraftfahrzeugs beschrieben, wobei durch Schließen der Trennkupplung eine Verbrennungskraftmaschine kraftschlüssig mit einem Antriebsstrang verbindbar ist. Dabei wird, wenn sich an der Trennkupplung eine definierte Soll-Differenzdrehzahl einstellen soll, abhängig von der Soll-Differenzdrehzahl und einem von der Trennkupplung zu übertragenden verbrennungsmotorischen Moment ein Übertragungsfaktor und abhängig von dem Übertragungsfaktor ein Ansteuerdruck für die Trennkupplung bestimmt und die Trennkupplung mit diesem Ansteuerdruck angesteuert. Dann wird die sich abhängig von dem Ansteuerdruck an der Trennkupplung tatsächlich ausbildende Ist-Differenzdrehzahl ermittelt und abhängig von einer Abweichung zwischen der Soll-Differenzdrehzahl und der Ist-Differenzdrehzahl mit Hilfe eines Reglers ein korrigierter Übertragungsfaktor bestimmt und abhängig von dem korrigierten Übertragungsfaktor und dem zu übertragenden, verbrennungsmotorischen Moment ein korrigierter Ansteuerdruck für die Trennkupplung bestimmt und die Trennkupplung dann mit diesem korrigierten Ansteuerdruck angesteuert.

In der DE 10 2015 210 670 A1, DE 10 2006 037 838 A1 und DE 10 2007 033 698 A1 werden weitere Verfahren zur Steuerung von Kupplungen von Kraftfahrzeugen beschrieben.

Schließlich ist aus der DE 10 2015 215 905 A1 ein Verfahren zur Steuerung einer Trennkupplung bekannt, bei dem die Verbrennungskraftmaschine stillgelegt bzw. abgeschaltet wird und dann die Trennkupplung geöffnet wird. Bei abgeschalteter Verbrennungskraftmaschine und bei geöffneter Trennkupplung wird ein zeitlicher Gradient der Drehzahl der Verbrennungskraftmaschine erfasst. Danach wird die Trennkupplung teilweise wieder geschlossen, nämlich sobald die Drehzahl der Verbrennungskraftmaschine unter einen vorbestimmten Wert abgefallen ist, wobei der zeitliche Gradient der Drehzahl der Verbrennungskraftmaschine bei der teils geschlossenen Kupplung ermittelt wird. Hiernach erfolgt die Adaption der Kupplungskennlinie. Es wird also hier zunächst die Verbrennungskraftmaschine stillgelegt/abgeschaltet, die Kupplung geöffnet und danach wieder geschlossen. Der Steuerungsaufwand, insbesondere zur Adaption der Kupplungskennlinie ist komplex und aufwendig.

Die im Stand der Technik bekannten Verfahren sind jedoch noch nicht optimal ausgebildet. So sind die im Stand der Technik bekannten Verfahren grundsätzlich sehr komplex. Insbesondere zielen die im Stand der Technik bekannten Verfahren häufig auf eine, meist komplexe, Regelung ab, wobei auch eine Adaption von Kupplungskennlinien hierbei durchaus komplex ist. An Trennkupplungen, zum Beispiel von Hybridfahrzeugen, können jedoch hinsichtlich Komfort und/oder Regelbarkeit durchaus geringere Anforderungen als beispielsweise an Kupplungen, beispielsweise an Doppelkupplungen, zum Beispiel von herkömmlichen Kraftfahrzeugen mit Doppelkupplungsgetrieben gestellt werden.

Der Erfindung liegt daher die Aufgabe zu Grunde, das zuvor genannte Verfahren nun derart auszugestalten und weiterzubilden, dass dadurch eine Trennkupplung auf einfache Weise angesteuert werden kann, insbesondere dann auch auf einfache Weise eine Adaption einer Kupplungskennlinie erfolgen kann und/oder der Verschleiß der Trennkupplung verringert ist.

Die der Erfindung zugrunde liegende Aufgabe wird durch ein Verfahren zur Steuerung einer Trennkupplung eines Antriebsaggregats eines Fahrzeugs und/oder einer Maschine zunächst mit den Merkmalen des Patentanspruches 1 gelöst.

Dabei ist durch Schließen der Trennkupplung eine Verbrennungskraftmaschine kraftschlüssig mit einem Antriebsstrang verbindbar beziehungsweise verbunden. Im geschlossenen Zustand der Trennkupplung kann dabei zum Beispiel die Verbrennungskraftmaschine über die Trennkupplung an den Antriebsstrang angekoppelt sein. Im geöffneten Zustand der Trennkupplung kann dabei zum Beispiel die Verbrennungskraftmaschine durch die Trennkupplung von dem Antriebsstrang abgekoppelt sein. Die Verbrennungskraftmaschine kann dabei insbesondere mit einem Motordrehmoment betreibbar sein beziehungsweise betrieben werden und ein entsprechendes, insbesondere bestimmtes Motordrehmoment bereitstellen.

In dem Verfahren wird beim Vorliegen einer Schließ-Anforderung zum Schließen der Trennkupplung, abhängig von dem, insbesondere zu diesem Zeitpunkt anliegenden und/oder bereitgestellten Motordrehmoment und von einem zwischen der Verbrennungskraftmaschine und der Trennkupplung bestehenden, konstanten Übertragungsfaktor ein Kupplungsmoment bestimmt, insbesondere berechnet, wobei dann die Trennkupplung zur Realisierung des bestimmten, insbesondere berechneten, Kupplungsmomentes mit einem Schließdruck geschlossen wird. Beispielsweise kann dies bei einer sehr bevorzugten Ausführungsform beim Vorliegen einer Schließ-Anforderung zum Schließen der Trennkupplung mit einer Überanpressung führen, was im Folgenden auch noch näher erläutert wird.

Das Verfahren kann auf besonders einfache Weise, insbesondere als einfache Steuerung, insbesondere also nicht als Regelung, ausgeführt werden. Dabei können insbesondere lediglich ohnehin bereits bekannte Parameter, wie das ohnehin vorhandene Motordrehmomentsignal, welches beispielsweise von einem Motorsteuergerät, zum Beispiel vom CAN (Englisch: Controller Area Network), gerechnet und/oder bereitgestellt werden kann, und der ebenfalls bekannte, konstante Übertragungsfaktor, beispielsweise insbesondere das bestehende, konstante Übersetzungsverhältnis, zwischen der Verbrennungskraftmaschine und der Trennkupplung zur Steuerung der Trennkupplung genutzt werden. So kann dann das an der Trennkupplung gewünschte anliegende und/oder erforderliche Kupplungsmoment auf besonders einfache Weise bestimmt, insbesondere berechnet, werden.

Da das Motordrehmoment bekannt und im Allgemeinen ein Motorsteuergerät vorhanden ist, ist dabei sowohl eine Berechnung einer insbesondere weiteren Stellgröße als auch ein zusätzlicher separater Kontroller nicht erforderlich. Zudem kann das Verfahren insbesondere auch ohne zusätzliche Sensoren beziehungsweise "sensorlos" durchgeführt werden, was auch nachfolgend noch erläutert werden darf. Das Verfahren zur Steuerung der Trennkupplung kann daher auf einfache Weise und beispielsweise ohne Zusatzaufwand in das Motorsteuergerät integriert werden. So kann durch das Verfahren eine energetisch günstige Kupplungsbetätigung, insbesondere mit einem hohen, gegebenenfalls sogar bestmöglichen, Wirkungsgrad erzielt werden.

Dabei bietet das Verfahren vorteilhafterweise die Möglichkeit das Kupplungsmoment immer dem jeweiligen Motormoment anzupassen.

Das Kupplungsmoment wird daher abhängig von dem Motordrehmoment und abhängig von dem erwähnten konstanten Übertragungsfaktor bestimmt, insbesondere berechnet, und dann die Trennkupplung zur Realisierung dieses bestimmten, insbesondere berechneten, Kupplungsmomentes mit einem Schließdruck geschlossen. Dies kann besonders energetisch günstig sein. Der Schließdruck kann dabei beispielsweise durch einen Aktor, zum Beispiel einen Smart-Aktor, und/oder eine Pumpe einstellbar sein beziehungsweise eingestellt werden.

Die Zusammenhänge zwischen dem zu realisierenden bestimmten Kupplungsmoment bzw. dem an der Trennkupplung anliegenden und/oder erforderlichen Kupplungsmoment und dem dazu notwendigen und/oder erforderlichen, insbesondere bestimmten Schließdruck, beispielsweise in Abhängigkeit vom Strom am Aktor und/oder vom Strom und/oder von der Drehzahl einer Pumpe, sind im Vorfeld bekannt. Daher können diese Abhängigkeiten im Vorfeld beispielsweise in Form eines Kennfeldes beziehungsweise einer Kennlinie, zum Beispiel im Motorsteuergerät, hinterlegt werden. Anhand des mittels des bestimmten bzw. anliegenden Motordrehmoments dann bestimmten, insbesondere berechneten, Kupplungsmomentes kann auf diese Weise ein Steuersignal beispielsweise an den Aktor und/oder an die Pumpe gesendet werden, über welches dann ein bestimmter Schließdruck angefordert und an der Trennkupplung eingestellt werden kann, welcher dann an der Trennkupplung das bestimmte und insbesondere beispielsweise zur Fahrsituation passende, Kupplungsmoment einstellt bzw. realisiert.

Beispielsweise wird beim Vorliegen einer Schließ-Anforderung zum Schließen der Trennkupplung, beispielsweise beim Vorliegen einer Schließ-Anforderung zum Schließen der Trennkupplung mit einer Überanpressung, gegebenenfalls immer, anhand des bestimmten, insbesondere berechneten, Kupplungsmomentes und einer Kupplungsmoment-Schließdruck-Kennlinie ein Schließdruck bestimmt und dann die Trennkupplung durch Einstellen des bestimmten Schließdrucks mit dem bestimmten, insbesondere berechneten, Kupplungsmoment geschlossen.

In einer sehr bevorzugten weiteren Ausgestaltung wird beim Vorliegen einer Schließ-Anforderung zum Schließen der Trennkupplung, beispielsweise beim Vorliegen einer Schließ-Anforderung zum Schließen der Trennkupplung mit einer Überanpressung immer das Kupplungsmoment zusätzlich unter Addition eines Wertes, insbesondere eines Offset-Wertes, (X) bestimmt, insbesondere berechnet. Durch die Addition dieses Wertes, insbesondere des Offset-Wertes, (X) kann sichergestellt werden, dass die Trennkupplung ganz sicher nicht rutscht bzw. schlupffrei betrieben wird. So kann die Trennkupplung insbesondere vor einem unnötigen Verschleiß geschützt werden.

In einer speziellen sehr bevorzugten Ausgestaltung wird beim Vorliegen einer Schließ-Anforderung zum Schließen der Trennkupplung, beispielsweise beim Vorliegen einer Schließ-Anforderung zum Schließen der Trennkupplung mit einer Überanpressung das Kupplungsmoment (M_{K}) daher durch Multiplikation des Motordrehmoments (M_{VKM}) mit dem konstanten Übertragungsfaktor (i_{VKM-K}) und durch eine anschließende Addition des Wertes, insbesondere Offset-Wertes, (X) bestimmt, insbesondere berechnet.

Bei dem erfindungsgemäßen Verfahren wird zur Adaption der Kupplungsmoment-Schließdruck-Kennlinie, beispielsweise nach einem definierten Zeitabschnitt und/oder in einer definierten Fahrsituation, die Trennkupplung aus einem geschlossenen Zustand mit Überanpressung kommend durch, beispielsweise stetige, Absenkung des Schließdrucks bis zum Erreichen mindestens einer bestimmten Differenzdrehzahl (nₐₙ-n_{ab}) zwischen einer antriebsseitigen Drehzahl (nₐₙ) der Trennkupplung und einer abtriebsseitigen Drehzahl (n_{ab}) der Trennkupplung geöffnet und bei der mindestens einen bestimmten Differenzdrehzahl (nₐₙ-n_{ab}) der Schließdruck (p) und das Motordrehmoment (M_{VKM}) bestimmt. Aus dem bestimmten Motordrehmoment (M_{VKM}) wird dann durch Multiplikation mit dem konstanten Übertragungsfaktor (i_{VKM-K}), das dem bestimmten Schließdruck (p) zugeordnete Kupplungsmoment neu bestimmt, insbesondere berechnet. Mit dem dann resultierenden Wert wird das dem bestimmten Schließdruck (p) zugeordnete Kupplungsmoment in der Kupplungsmoment-Schließdruck-Kennlinie entsprechend adaptiert, insbesondere korrigiert. So kann auf einfache Weise eine Kennlinienadaption "von oben" implementiert werden. Durch die Kennlinienadaption kann die Trennkupplung noch besser vor einem unnötigen Verschleiß geschützt werden. Dadurch, dass die Kennlinienadaption aus der Überanpressung, also von "oben kommend" und nur bis zum Erreichen der mindestens einen bestimmten Differenzdrehzahl (nₐₙ-n_{ab}) durchgeführt wird, kann dabei bewirkt werden, dass die Trennkupplung während der Kennlinienadaption keinen nennenswerten Schlupf ertragen muss. So kann die Trennkupplung auch bei der Kennlinienadaption vor unnötigem Verschleiß geschützt werden.

Bei Antriebsaggregaten, welche zusätzlich zu der Verbrennungskraftmaschine zwei Elektromaschinen aufweisen, von denen eine mit einem antriebsseitigen Teil der Trennkupplung und die andere mit einem abtriebsseitigen Teil der Trennkupplung drehwirksam verbunden ist, können die antriebsseitige Drehzahl (nₐₙ) und die abtriebsseitige Drehzahl (n_{ab}) der Trennkupplung durch Rotorlagegeber der jeweiligen Elektromaschine bestimmt, insbesondere gemessen werden. Auf diese Weise kann auch die Kennlinienadaption ohne weitere zusätzliche Sensoren beziehungsweise "sensorlos" auf einfache Weise durchgeführt werden.

In einer weiteren Ausgestaltung weist daher das Antriebsaggregat weiterhin eine erste Elektromaschine und eine zweite Elektromaschine auf. Die erste Elektromaschine ist dabei mit einem antriebsseitigen Teil der Trennkupplung und die zweite Elektromaschine mit einem abtriebsseitigen Teil der Trennkupplung drehwirksam verbunden oder verbindbar. Dabei kann das Fahrzeug insbesondere als ein Hybridfahrzeug ausgebildet sein.

Die erste Elektromaschine kann dabei beispielsweise durch Schließen der Trennkupplung mit dem Antriebsstrang, insbesondere mit einem Differential, kraftschlüssig verbindbar sein. Die zweite Elektromaschine kann dabei beispielsweise, insbesondere unabhängig von der Trennkupplung und/oder direkt, mit dem Antriebsstrang, insbesondere mit einem Differential, kraftschlüssig verbunden sein.

In dieser Ausgestaltung kann die antriebsseitige Drehzahl (nₐₙ) der Trennkupplung insbesondere durch einen Rotorlagegeber der ersten Elektromaschine und die abtriebsseitige Drehzahl (n_{ab}) der Trennkupplung durch einen Rotorlagegeber der zweiten Elektromaschine bestimmt, insbesondere gemessen, werden. Beispielsweise kann dabei durch den Rotorlagegeber der ersten Elektromaschine die Drehzahl der ersten Elektromaschine gemessen und aus der gemessenen Drehzahl der ersten Elektromaschine, insbesondere in Abhängigkeit von einer möglichen Übersetzung zwischen der ersten Elektromaschine und dem antriebsseitigen Teil der Kupplung, die antriebsseitige Drehzahl (nₐₙ) der Kupplung berechnet werden. Durch den Rotorlagegeber der zweiten Elektromaschine kann dabei beispielsweise die Drehzahl der zweiten Elektromaschine gemessen und aus der gemessenen Drehzahl der zweiten Elektromaschine, insbesondere in Abhängigkeit von einer möglichen Übersetzung zwischen der zweiten Elektromaschine und dem abtriebsseitigen Teil der Kupplung, die abtriebsseitige Drehzahl (n_{ab}) der Kupplung berechnet werden.

In einer weiteren Ausgestaltung weist das Antriebsaggregat, insbesondere die Verbrennungskraftmaschine, insbesondere ein Motorsteuergerät auf. In dieser Ausgestaltung kann die Bestimmung, insbesondere Berechnung, des Kupplungsmomentes insbesondere durch das Motorsteuergerät erfolgen. Beispielsweise kann in dieser Ausgestaltung sowohl die Bestimmung, insbesondere Berechnung, des Kupplungsmomentes als auch die Bestimmung des Schließdrucks, letzteren insbesondere anhand der Kupplungsmoment-Schließdruck-Kennlinie, durch das Motorsteuergerät erfolgen. Zum Beispiel kann in dieser Ausgestaltung auch die Adaption der Kupplungsmoment-Schließdruck-Kennlinie durch das Motorsteuergerät erfolgen.

Die Trennkupplung kann beispielsweise als eine Nasskupplung oder als eine Trockenkupplung ausgebildet sein.

In einer speziellen Ausgestaltung ist die Trennkupplung als eine Nasskupplung, beispielsweise als eine nasslaufende Lamellenkupplung ausgebildet.

In einer weiteren Ausgestaltung ist das Verfahren zur Steuerung einer Trennkupplung des Antriebsaggregats eines Kraft- und/oder Nutz- und/oder Baufahrzeugs und/oder einer Land- und/oder Forstmaschine ausgelegt.

In einer speziellen Ausgestaltung ist das Verfahren zur Steuerung einer Trennkupplung des Antriebsaggregats eines Hybridfahrzeuges, insbesondere eines Hybrid-Antriebsstranges eines Kraftfahrzeuges, ausgelegt.

Die eingangs genannten Nachteile sind daher vermieden und entsprechende Vorteile sind erzielt.

Es gibt nun eine Vielzahl von Möglichkeiten, das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden werden einige bevorzugte Ausgestaltungen des erfindungsgemäßen Verfahrens anhand der Zeichnung und der dazugehörigen Beschreibung näher erläutert. In der Zeichnung zeigt:

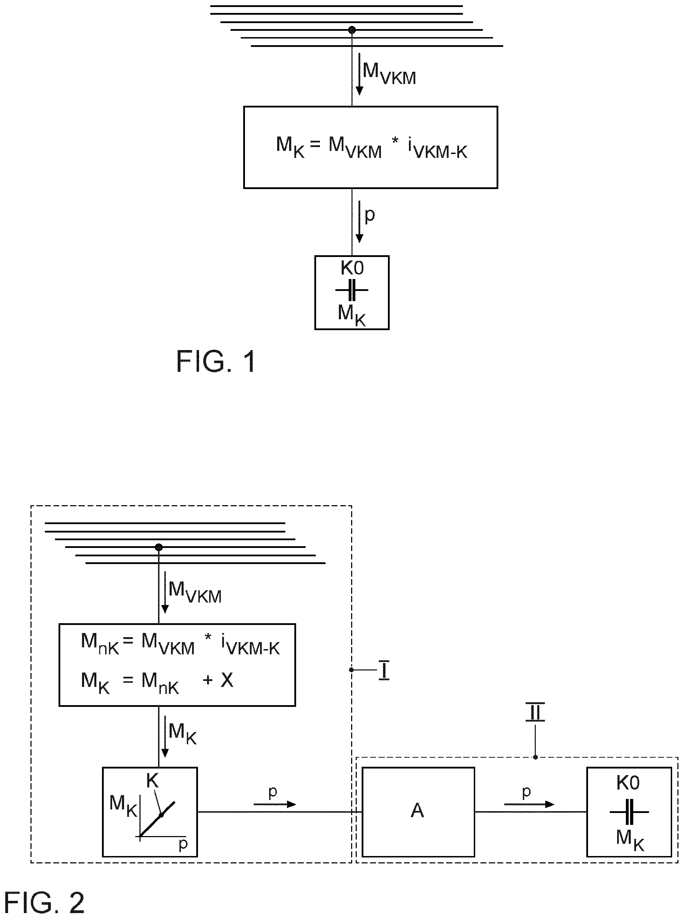

- Fig. 1: in einem schematischen Flussdiagramm eine Ausführungsform des Verfahrens, in dem abhängig von einem Motordrehmoment und von einem konstanten Übertragungsfaktor (zwischen Verbrennungskraftmaschine und Trennkupplung) ein Kupplungsmoment bestimmt und die Trennkupplung zur Realisierung des bestimmten Kupplungsmomentes angesteuert wird;
- Fig. 2: in einem schematischen Flussdiagramm eine spezielle sehr bevorzugte Ausgestaltung der in Fig. 1 gezeigten Ausführungsform, wobei anhand des hier bestimmten Kupplungsmomentes und einer Kupplungsmoment-Schließdruck-Kennlinie ein Schließdruck bestimmt wird und die Trennkupplung durch Einstellen des bestimmten Schließdrucks zur Realisierung des bestimmten Kupplungsmomentes geschlossen wird;

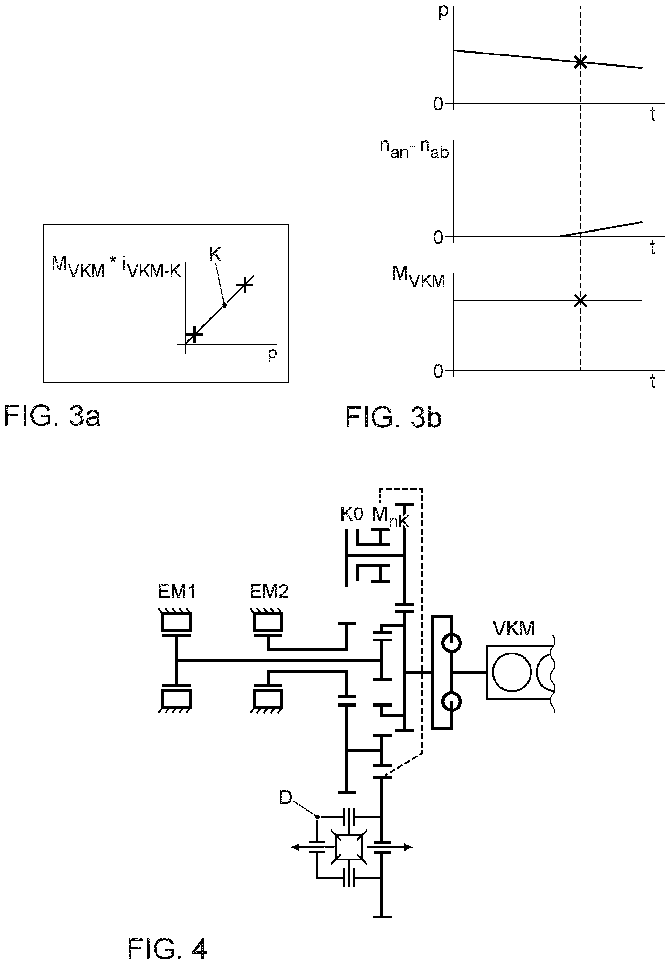

- Fig. 3a: in einem schematischen Graphen eine durch zwei Adaptionspunkte adaptierte Kupplungsmoment-Schließdruck-Kennlinie;
- Fig. 3b: in schematischen jeweiligen Graphen, die Auftragungen des Schließdrucks, der Differenzdrehzahl und des Motordrehmoments über der Zeit beim Öffnen einer aus einem geschlossenen Zustand mit einer Überanpressung kommenden Trennkupplung zur Bestimmung eines in Fig. 3a gezeigten Adaptionspunktes; und
- Fig. 4: in einer schematischen Darstellung ein Hybridantriebsaggregat eines Fahrzeugs und/oder einer Maschine mit einer Trennkupplung, insbesondere eines Hybrid-Antriebsstranges eines Hybrid-Kraftfahrzeuges, mit einer Verbrennungskraftmaschine sowie mit einer ersten Elektromaschine und mit einer zweiten Elektromaschine, wobei die Trennkupplung durch das erfindungsgemäße Verfahren steuerbar ist.

Die Fig. 1 bis 4 zeigen zumindest teilweise das erfindungsgemäße Verfahren, insbesondere zeigt Fig. 1 eine erste Ausführungsform eines Verfahrens zur Steuerung einer Trennkupplung K0 eines Antriebsaggregats eines Fahrzeugs und/oder einer Maschine, beispielsweise eines Kraft- und/oder Nutz- und/oder Baufahrzeugs und/oder einer Land- und/oder Forstmaschine, zum Beispiel eines Hybridfahrzeugs, insbesondere zur Steuerung einer Trennkupplung K0 eines Hybrid-Antriebsstranges eines Kraftfahrzeuges, insbesondere eines Hydrid-Kraftfahrzeuges.

Dabei ist durch Schließen der Trennkupplung K0 eine Verbrennungskraftmaschine VKM kraftschlüssig mit einem Antriebsstrang verbindbar. Die Verbrennungskraftmaschine VKM ist dabei mit einem Motordrehmoment M_{VKM} betreibbar bzw. stellt ein insbesondere bestimmtes Motordrehmoment M_{VKM} bereit.

Fig. 1 veranschaulicht, dass in dem Verfahren beim Vorliegen einer Schließ-Anforderung zum Schließen der Trennkupplung K0 abhängig von dem anliegenden Motordrehmoment M_{VKM} und von einem bestehenden und/oder konstanten Übertragungsfaktor i_{VKM-K} (zwischen Verbrennungskraftmaschine VKM und Trennkupplung K0) ein Kupplungsmoment M_{K} bestimmt, insbesondere berechnet, wird und die Trennkupplung K0 zur Realisierung des bestimmten, insbesondere berechneten, Kupplungsmomentes M_{K} mit einem, insbesondere bestimmten Schließdruck p geschlossen wird.

Das Motordrehmoment M_{VKM} kann dabei insbesondere von einem Motorsteuergerät, zum Beispiel einem CAN (der Verbrennungskraftmaschine VKM) bereitgestellt werden.

Der bestehende und/oder konstante Übertragungsfaktor i_{VKM-K} kann dabei insbesondere ein bekanntes, konstantes Übersetzungsverhältnis zwischen der Verbrennungskraftmaschine VKM und der Trennkupplung K0 sein. Der jeweilige, insbesondere bestimmte Schließdruck p wird aus einer hier in Fig. 1 nicht dargestellten Kupplungsmoment-Schließdruck-Kennlinie ermittelt.

Fig. 1 illustriert weiterhin, dass das Kupplungsmoment M_{K} dabei durch eine Multiplikation des Motordrehmoments M_{VKM} mit dem konstanten Übertragungsfaktor i_{VKM-K} bestimmt, insbesondere berechnet, werden kann. Hierbei ist zunächst in Fig. 1 dargestellt, dass das Kupplungsmoment M_{K} durch eine Multiplikation des Motordrehmomentes M_{VKM} mit dem konstanten Übertragungsfaktor ivKM-K berechnet wird. Hierbei kann der Übertragungsfaktor i_{VKM-K} so gewählt sein, wie dies insbesondere in Abhängigkeit des jeweiligen spezifischen Aggregates gewünscht ist.

Bezüglich des Schließens der Trennkupplung K0 mit einer Überanpressung bzw. zur Realisierung des Kupplungsmomentes M_{K} mit einer Überanpressung darf insbesondere auf die Ausführungen zu Fig. 2 verwiesen werden, wo zur Berechnung des Kupplungsmomentes M_{K} nach entsprechender Multiplikation des Motordrehmomentes M_{VKM} mit einem konstanten Übertragungsfaktor i_{VKM-K} dann eine anschließende Addition eines Wertes, insbesondere nämlich eines Offset-Wertes X erfolgt, was im Folgenden nochmals näher erläutert werden darf:

Fig. 2 zeigt eine spezielle bevorzugte Ausgestaltung der in Fig. 1 gezeigten grundsätzlichen Ausführungsform. In dieser in Fig. 2 dargestellten Ausgestaltung ist die Trennkupplung K0 durch einen bestimmten Schließdruck schließbar. Dabei wird anhand des hier bestimmten Kupplungsmomentes M_{K} und einer Kupplungsmoment-Schließdruck-Kennlinie K ein Schließdruck p bestimmt. Das Einstellen des Schließdrucks p wird dann von einem Aktor A, beispielsweise einem Motor-Pumpen-Verbund, angefordert und der entsprechende Schließdruck p durch diesen an der Trennkupplung K0 eingestellt, wodurch an der Trennkupplung K0 dann das bestimmte Kupplungsmoment M_{K} erzeugt wird. Die Fig. 2 veranschaulicht, dass durch Multiplikation des Motordrehmoments M_{VKM} mit dem konstanten Übertragungsfaktor i_{VKM-K} zunächst ein nominales Kupplungsmoment M_{nK} berechnet werden kann. Durch eine anschließende Addition des nominalen Kupplungsmomentes M_{nK} und eines Wertes, insbesondere eines Offset-Wertes, X kann dann das Kupplungsmoment M_{K} berechnet werden. Der Wert, insbesondere Offset-Wert, X kann beispielsweise ein empirisch ermittelter Wert sein und als Sicherheit zur Gewährleistung eines sicheren, insbesondere schlupffreien Betriebs der Trennkupplung K0 dienen. Insbesondere wird dadurch sichergestellt, dass das Schließen der Trennkupplung K0 mit einer entsprechenden, insbesondere bestimmten Überanpressung erfolgt.

Fig. 2 illustriert weiterhin, dass das Bereitstellen des Motordrehmomentes M_{VKM}, die Berechnung des Kupplungsmomentes M_{K} und die Bestimmung des Schließdrucks p anhand des Kupplungsmomentes M_{K} und der Kupplungsmoment-Schließdruck-Kennlinie K sowie die Anforderung des Schließdrucks p in dem Motorsteuergerät I implementiert beziehungsweise verortet sein kann.

Der Aktor A und das Einstellen des bestimmten Schließdrucks p an der Trennkupplung K0 durch den Aktor A, wobei die Trennkupplung K0 dann das bestimmte Kupplungsmoment M_{K} realisiert, kann dabei beispielsweise in einem Getriebe II implementiert beziehungsweise verortet sein.

Fig. 3a zeigt in einem schematischen Graphen eine zur Durchführung des erfindungsgemäßen Verfahrens geeignete, hier insbesondere adaptierte Kupplungsmoment-Schließdruck-Kennlinie K und veranschaulicht, dass die Kupplungsmoment-Schließdruck-Kennlinie K einen stark linearen Verlauf aufweist. Aufgrund des stark linearen Verlaufs kann die Kupplungsmoment-Schließdruck-Kennlinie K bereits durch Bestimmung von insbesondere nur zwei Adaptionspunkten, von denen vorzugsweise einer in einem unteren Bereich, beispielsweise von ≥ 10 % bis ≤ 20 % der Kapazität, und der andere in einem oberen Bereich, beispielsweise von ≥ 80 % bis ≤ 90 % der Kapazität liegt, ausreichend adaptiert beziehungsweise korrigiert werden. Die Adaptionspunkte zur Adaption der Kupplungsmoment-Schließdruck-Kennlinie K können, beispielsweise nach einem definierten Zeitabschnitt und/oder in einer definierten Fahrsituation, dadurch ermittelt werden, dass die Trennkupplung K0 aus einem geschlossenen Zustand mit Überanpressung kommend durch, beispielsweise insbesondere stetige, Absenkung des Schließdrucks p bis zum Erreichen mindestens einer bestimmten Differenzdrehzahl (nₐₙ-n_{ab}) zwischen einer antriebsseitigen Drehzahl (nₐₙ) der Trennkupplung K0 und einer abtriebsseitigen Drehzahl (n_{ab}) der Trennkupplung K0 geöffnet wird.

Fig. 3b zeigt zeitliche Auftragungen des Schließdrucks p, der Differenzdrehzahl nₐₙ-n_{ab} und des Motordrehmoments M_{VKM} beim Öffnen einer aus einem geschlossenen Zustand mit Überanpressung kommenden Trennkupplung K0 zur Bestimmung eines der in Fig. 3a gezeigten Adaptionspunkte und veranschaulicht, dass bei der mindestens einen bestimmten Differenzdrehzahl (nₐₙ-n_{ab}) der Schließdruck p und das Motordrehmoment M_{VKM} bestimmt werden kann.

Aus dem auf diese Weise bestimmten Motordrehmoment M_{VKM} wird dann durch Multiplikation mit dem konstanten Übertragungsfaktor i_{VKM-K}, das dem auf obige Weise bestimmten Schließdruck p zugeordnete Kupplungsmoment bestimmt, insbesondere aus M_{VKM} * i_{VKM-K} (neu) berechnet.. In der Kupplungsmoment-Schließdruck-Kennlinie K kann dann mit dem resultierenden Wert das dem bestimmten Schließdruck p zugeordnete (alte) Kupplungsmoment beziehungsweise der dem bestimmten Schließdruck p zugeordnete Punkt adaptiert, insbesondere korrigiert, werden und auf diese Weise die Kennlinie K adaptiert beziehungsweise "neu geschrieben" werden (vgl. hierzu die Fig. 3a und 3b).

Bei den nachfolgenden Schließ-Anforderungen zum Schließen der Trennkupplung K0 kann dann die auf diese Weise adaptierte Kupplungsmoment-Schließdruck-Kennlinie K verwendet werden. Die Adaption der Kupplungsmoment-Schließdruck-Kennlinie K kann beispielsweise ebenfalls durch das Motorsteuergerät erfolgen.

Die Fig. 4 zeigt eine schematische Darstellung eines Hybridantriebsaggregats eines Fahrzeugs und/oder einer Maschine, beispielsweise eines Hybridfahrzeugs, mit einer Trennkupplung K0, mit einer Verbrennungskraftmaschine VKM sowie mit einer ersten Elektromaschine EM1 und mit einer zweiten Elektromaschine EM2 und mit einem ein Differential D aufweisenden Antriebsstrang, insbesondere ein Getriebe, dessen Trennkupplung K0 durch das erfindungsgemäße Verfahren steuerbar ist.

Dabei ist durch Schließen der Trennkupplung K0 die Verbrennungskraftmaschine VKM kraftschlüssig mit dem das Differential D umfassenden Antriebsstrang, insbesondere Getriebe, verbindbar. Die erste Elektromaschine EM1 ist dabei mit einem antriebsseitigen Teil der Trennkupplung K0 und die zweite Elektromaschine EM2 mit einem abtriebsseitigen Teil der Trennkupplung K0 drehwirksam verbunden oder verbindbar. Dabei ist die erste Elektromaschine EM1 insbesondere durch Schließen der Trennkupplung K0 mit dem Differential D kraftschlüssig verbindbar. Die zweite Elektromaschine ist dabei, insbesondere unabhängig von der Trennkupplung K0 und/oder direkt, mit dem Differential D kraftschlüssig verbunden.

Bei einem derartig ausgestalteten Hybridantriebsaggregat, insbesondere eines Hybrid-Antriebsstranges, kann vorteilhafterweise die antriebsseitige Drehzahl (nₐₙ) der Trennkupplung K0 durch einen Rotorlagegeber der ersten Elektromaschine EM1 und die abtriebsseitige Drehzahl (n_{ab}) der Trennkupplung K0 durch einen Rotorlagegeber der zweiten Elektromaschine EM2 bestimmt, insbesondere gemessen, werden. So kann auch die Adaption der Kupplungsmoment-Schließdruck-Kennlinie K ohne zusätzliche Sensoren beziehungsweise "sensorlos" durchgeführt werden.

### Bezugszeichenliste

- M_{VKM}: Motordrehmoment der Verbrennungskraftmaschine
- i_{VKM-K}: konstanter Übertragungsfaktor bzw. Übersetzung / Übersetzungsfaktor zwischen Verbrennungskraftmaschine und Trennkupplung
- M_{K}: Kupplungsmoment
- X: Offset
- K0: Trennkupplung

- M_{nK}: nominales Kupplungsmoment
- p: Schließdruck
- A: Aktor
- I: Motorsteuergerät der Verbrennungskraftmaschine
- II: Getriebe

- nₐₙ: antriebsseitige Drehzahl der Trennkupplung
- n_{ab}: abtriebsseitige Drehzahl der Trennkupplung
- nₐₙ-n_{ab}: Differenzdrehzahl zwischen antriebsseitiger und abtriebsseitiger Drehzahl der Trennkupplung
- t: Zeit

- VKM: Verbrennungskraftmaschine
- D: Differential
- K: Kupplungskennlinie / Kupplungsmoment-Schließdruck-Kennlinie

## Patentansprüche

1. Verfahren zur Steuerung einer Trennkupplung (K0) eines Antriebsaggregats eines Fahrzeugs und/oder einer Maschine, insbesondere eines Hybrid-Antriebsstranges eines Kraftfahrzeuges, wobei durch Schließen der Trennkupplung (K0) eine Verbrennungskraftmaschine (VKM) kraftschlüssig mit einem Antriebsstrang verbindbar ist, wobei die Verbrennungskraftmaschine (VKM) mit einem Motordrehmoment (M_{VKM}) betreibbar ist und/oder ein Motordrehmoment (M_{VKM}) bereitstellt, **dadurch gekennzeichnet, dass**
- beim Vorliegen einer Schließ-Anforderung zum Schließen der Trennkupplung (K0) abhängig von dem dann anliegenden und/oder bereitgestellten Motordrehmoment (M_{VKM}) und abhängig von einem zwischen der Verbrennungskraftmaschine (VKM) und der Trennkupplung (K0) bestehenden konstanten Übertragungsfaktor (i_{VKM-K}) ein Kupplungsmoment (M_{K}) bestimmt, insbesondere berechnet, wird und die Trennkupplung (K0) zur Realisierung des bestimmten Kupplungsmomentes (M_{K}) mit einem Schließdruck (p) geschlossen wird,
- wobei anhand des bestimmten Kupplungsmomentes (M_{K}) und einer Kupplungsmoment-Schließdruck-Kennlinie der Schließdruck (p) bestimmt wird und die Trennkupplung (K0) mit dem bestimmten Schließdruck (p) zur Realisierung des bestimmten Kupplungsmomentes (M_{K}) geschlossen wird,
- wobei zur Adaption der Kupplungsmoment-Schließdruck-Kennlinie (K) die Trennkupplung (K0) aus einem geschlossenen Zustand mit Überanpressung kommend durch Absenkung des Schließdrucks bis zum Erreichen mindestens einer bestimmten Differenzdrehzahl (nₐₙ-n_{ab}) zwischen einer antriebsseitigen Drehzahl (nₐₙ) der Trennkupplung (K0) und einer abtriebsseitigen Drehzahl (n_{ab}) der Trennkupplung (K0) geöffnet und bei der mindestens einen bestimmten Differenzdrehzahl (nₐₙ-n_{ab}) der Schließdruck (p) und das Motordrehmoment (M_{VKM}) bestimmt wird, wobei dann aus dem auf diese Weise bestimmten Motordrehmoment (M_{VKM}) durch Multiplikation mit dem konstanten Übertragungsfaktor (i_{VKM-K}) das dem auf obige Weise bestimmten Schließdruck (p) zugeordnete Kupplungsmoment neu bestimmt, insbesondere berechnet, und mit dem resultierenden Wert (M_{VKM} * i_{VKM-K}) das dem bestimmten Schließdruck (p) zugeordnete alte Kupplungsmoment in der Kupplungsmoment-Schließdruck-Kennlinie (K) adaptiert, insbesondere korrigiert wird.

2. Verfahren nach Anspruch 1, wobei das bestimmte Kupplungsmoment (M_{K}) zusätzlich unter Addition eines Wertes, insbesondere eines Offset-Wertes, (X) bestimmt, insbesondere berechnet, wird.

3. Verfahren nach einem der vorstehenden Ansprüche, wobei das bestimmte Kupplungsmoment (M_{K}) durch Multiplikation des Motordrehmoments (M_{VKM}) mit dem konstanten Übertragungsfaktor (i_{VKM-K}) und durch eine anschließende Addition des Wertes, insbesondere des Offset-Wertes, (X) bestimmt, insbesondere berechnet, wird.

4. Verfahren nach einem der vorstehenden Ansprüche, wobei die Trennkupplung (K0) beim Vorliegen einer Schließ-Anforderung zum Schließen der Trennkupplung (K0) mit einer Überanpressung zur Realisierung des Kupplungsmomentes (M_{K}) mit Überanpressung geschlossen wird.

5. Verfahren nach einem der vorstehenden Ansprüche, wobei das Antriebsaggregat weiterhin eine erste Elektromaschine (EM1) und eine zweite Elektromaschine (EM2) aufweist, wobei die erste Elektromaschine (EM1) mit einem antriebsseitigen Teil der Trennkupplung (K0) und die zweite Elektromaschine (EM2) mit einem abtriebsseitigen Teil der Trennkupplung (K0) drehwirksam verbunden oder verbindbar ist, insbesondere wobei die erste Elektromaschine (EM1) durch Schließen der Trennkupplung (K0) mit einem Differential (D) kraftschlüssig verbindbar ist und wobei die zweite Elektromaschine (EM2), insbesondere unabhängig von der Trennkupplung (K0), mit dem Differential (D) kraftschlüssig verbunden ist, wobei die antriebsseitige Drehzahl (nₐₙ) der Trennkupplung (K0) durch einen Rotorlagegeber der ersten Elektromaschine (EM1) und die abtriebsseitige Drehzahl (n_{ab}) der Trennkupplung (K0) durch einen Rotorlagegeber der zweiten Elektromaschine (EM2) bestimmt, insbesondere gemessen, wird.

6. Verfahren nach einem der vorstehenden Ansprüche, wobei das Antriebsaggregat, insbesondere die Verbrennungskraftmaschine (VKM), ein Motorsteuergerät aufweist, wobei die Bestimmung, insbesondere Berechnung, des jeweiligen Kupplungsmomentes (M_{K}) durch das Motorsteuergerät erfolgt, insbesondere wobei die Bestimmung, insbesondere Berechnung, des Kupplungsmomentes (M_{K}) und die Bestimmung des Schließdrucks (p) anhand der Kupplungsmoment-Schließdruck-Kennlinie (K) durch das Motorsteuergerät erfolgt, insbesondere wobei auch die Adaption der Kupplungsmoment-Schließdruck-Kennlinie (K) durch das Motorsteuergerät erfolgt.

7. Verfahren nach einem der vorstehenden Ansprüche, wobei das Verfahren zur Steuerung einer Trennkupplung (K0) des Antriebsaggregats eines Kraft- und/oder Nutz- und/oder Baufahrzeugs und/oder einer Land- und/oder Forstmaschine ausgelegt ist.

8. Verfahren nach einem der vorstehenden Ansprüche, wobei das Verfahren zur Steuerung einer Trennkupplung (K0) des Antriebsaggregats und/oder des Antriebsstranges eines Hybridfahrzeugs ausgelegt ist.

## Claims

1. Method for controlling a separating clutch (K0) of a drive assembly of a vehicle and/or a machine, in particular a hybrid drive train of a motor vehicle, wherein an internal combustion engine (VKM) can be connected in a non-positive manner to a drive train by closing the separating clutch (K0), wherein the internal combustion engine (VKM) can be operated with an engine torque (M_{VKM}) and/or provides an engine torque (M_{VKM}), **characterized in that**
- in the presence of a closing request for closing the separating clutch (K0) a clutch torque (M_{K}) is determined, in particular calculated, depending on the engine torque (M_{VKM}) applied and/or provided then and depending on a constant transmission factor (i_{VKM-K}) existing between the internal combustion engine (VKM) and the separating clutch (K0), and the separating clutch (K0) is closed with a closing pressure (p) for realizing the determined clutch torque (M_{K}),
- wherein the closing pressure (p) is determined on the basis of the determined clutch torque (M_{K}) and a clutch torque closing pressure characteristic curve, and the separating clutch (K0) is closed with the determined closing pressure (p) for realizing the determined clutch torque (M_{K}),
- wherein, for adapting the clutch torque closing pressure characteristic curve (K), the separating clutch (K0) is opened starting from a closed state with excess contact pressure by reducing the closing pressure until at least a specific differential rotation speed (nₐₙ-n_{ab}) between a drive-side rotation speed (nₐₙ) of the separating clutch (K0) and an output-side rotation speed (n_{ab}) of the separating clutch (K0) is reached and the closing pressure (p) and the engine torque (M_{VKM}) are determined at the at least one specific differential rotation speed (nₐₙ-n_{ab}), wherein then the clutch torque associated with the closing pressure (p) determined in the above manner is re-determined, in particular recalculated, from the engine torque (M_{VKM}) determined in the above way by multiplication with the constant transmission factor (i_{VKM-K}), and using the resulting value (M_{VKM}*i_{VKM-K}) the old clutch torque associated with the determined closing pressure (p) is adapted, in particular corrected, in the clutch torque closing pressure characteristic curve (K).

2. Method according to Claim 1, wherein the determined clutch torque (M_{K}) is additionally determined, in particular calculated, with the addition of a value, in particular an offset value, (X).

3. Method according to either of the preceding claims, wherein the determined clutch torque (M_{K}) is determined, in particular calculated, by multiplying the engine torque (M_{VKM}) with the constant transmission factor (i_{VKM-K}) and by subsequently adding the value, in particular the offset value, (X).

4. Method according to one of the preceding claims, wherein the separating clutch (K0) is closed in the presence of a closing request for closing the separating clutch (K0) with excess contact pressure for realizing the clutch torque (M_{K}) with excess contact pressure.

5. Method according to one of the preceding claims, wherein the drive assembly further has a first electric machine (EM1) and a second electric machine (EM2), wherein the first electric machine (EM1) is rotationally connected or connectable to a drive-side part of the separating clutch (K0) and the second electric machine (EM2) is rotationally connected or connectable to an output-side part of the separating clutch (K0), in particular wherein the first electric machine (EM1) can be connected in a non-positive manner to a differential (D) by closing the separating clutch (K0), and wherein the second electric machine (EM2) is connected in a non-positive manner to the differential (D), in particular independently of the separating clutch (K0), wherein the drive-side rotation speed (nₐₙ) of the separating clutch (K0) is determined, in particular measured, by a rotor position sensor of the first electric machine (EM1) and the output-side rotation speed (n_{ab}) of the separating clutch (K0) is determined, in particular measured, by a rotor position sensor of the second electric machine (EM2).

6. Method according to one of the preceding claims, wherein the drive assembly, in particular the internal combustion engine (VKM), has an engine controller, wherein the respective clutch torque (M_{K}) is determined, particular calculated, by the engine controller, in particular wherein the clutch torque (M_{K}) is determined, in particular calculated, and the closing pressure (p) is determined on the basis of the clutch torque closing pressure characteristic curve (K) by the engine controller, in particular wherein the clutch torque closing pressure characteristic curve (K) is also adapted by the engine controller.

7. Method according to one of the preceding claims, wherein the method is designed for controlling a separating clutch (K0) of the drive assembly of a motor vehicle and/or utility vehicle and/or construction vehicle and/or a land and/or forestry machine.

8. Method according to one of the preceding claims, wherein the method is designed for controlling a separating clutch (K0) of the drive assembly and/or the drive train of a hybrid vehicle.

## Revendications

1. Procédé de commande d'un embrayage de séparation (K0) d'une unité d'entraînement d'un véhicule et/ou d'une machine, notamment d'une chaîne cinématique hybride d'un véhicule automobile, un moteur à combustion interne (VKM) pouvant être relié en force à une chaîne cinématique par fermeture de l'embrayage de séparation (K0), le moteur à combustion interne (VKM) pouvant fonctionner avec un couple moteur (M_{VKM}) et/ou fournissant un couple moteur (M_{VKM}), **caractérisé en ce que**
- lorsqu'il y a une demande de fermeture de l'embrayage de séparation (K0) en fonction du couple moteur alors appliqué et/ou fourni (M_{VKM}) et en fonction d'un facteur de transmission constant (i_{VKM-K}) existant entre le moteur à combustion interne (VKM) et l'embrayage de séparation (K0), un couple d'embrayage (M_{K}) est déterminé, en particulier calculé, et l'embrayage de séparation (K0) est fermé avec une pression de fermeture (p) afin de mettre en œuvre le couple d'embrayage déterminé (M_{K}),
- la pression de fermeture (p) étant déterminée sur la base du couple d'embrayage déterminé (M_{K}) et d'une caractéristique couple d'embrayage/pression de fermeture et l'embrayage de séparation (K0) est fermé avec la pression de fermeture déterminée (p) afin de réaliser le couple d'embrayage déterminé (M_{K}),
- pour l'adaptation de la caractéristique couple d'embrayage/pression de fermeture (K), l'embrayage de séparation (K0) étant ouvert depuis un état fermé avec surpression par abaissement de la pression de fermeture jusqu'à ce qu'au moins une vitesse de rotation différentielle (nₐₙ-n_{ab}) soit atteinte entre une vitesse de rotation côté entraînement (nₐₙ) de l'embrayage de séparation (K0) et une vitesse de rotation côté sortie (n_{ab}) de l'embrayage de séparation (K0) et la pression de fermeture (p) et le couple moteur (M_{VKM}) étant déterminés pour au moins une vitesse de rotation différentielle (nₐₙ-n_{ab}) déterminée, le couple d'embrayage qui est associé à la pression de fermeture (p) déterminée de la manière ci-dessus, étant ensuite à nouveau déterminé, en particulier calculé, à partir du couple moteur (M_{VKM}) ainsi déterminé par multiplication avec le facteur de transmission constant (i_{VKM-K}), et l'ancien couple d'embrayage, qui est associé à la pression de fermeture (p) déterminée, étant adapté, en particulier corrigé, avec la valeur résultante (M_{VKM}*i_{VKM-K}) dans la courbe caractéristique couple d'embrayage-pression de fermeture (K).

2. Procédé selon la revendication 1, le couple d'embrayage (M_{K}) déterminé étant en outre déterminé, notamment calculé, par addition d'une valeur, notamment une valeur de décalage (X).

3. Procédé selon l'une des revendications précédentes, le couple d'embrayage (M_{K}) déterminé étant déterminé, en particulier calculé, par multiplication du couple moteur (M_{VKM}) par le facteur de transmission constant (i_{VKM-K}) puis par addition de la valeur, notamment de la valeur de décalage, (X).

4. Procédé selon l'une des revendications précédentes, l'embrayage de séparation (K0) étant fermé avec une surpression pour réaliser le couple d'embrayage (M_{K}) lorsqu'il y a une demande de fermeture pour fermer l'embrayage de séparation (K0).

5. Procédé selon l'une des revendications précédentes, l'unité d'entraînement comprenant en outre une première machine électrique (EM1) et une deuxième machine électrique (EM2), la première machine électrique (EM1) étant reliée ou pouvant être reliée fonctionnellement en rotation à une partie côté entraînement de l'embrayage de séparation (K0) et la deuxième machine électrique (EM2) étant reliée ou pouvant être reliée fonctionnellement en rotation à une partie côté sortie de l'embrayage de séparation (K0), la première machine électrique (EM1) pouvant être reliée en force à un différentiel (D) par fermeture de l'embrayage de séparation (K0) et la deuxième machine électrique (EM2) étant reliée en force au différentiel (D), en particulier indépendamment de l'embrayage de séparation (K0), la vitesse de rotation côté entraînement (nₐₙ) de l'embrayage de séparation (K0) étant déterminée, notamment mesurée, par le biais d'un capteur de position de rotor de la première machine électrique (EM1) et la vitesse de rotation côté sortie (n_{ab}) de l'embrayage de séparation (K0) étant mesurée par le biais d'un capteur de position de rotor de la deuxième machine électrique (EM2).

6. Procédé selon l'une des revendications précédentes, l'unité d'entraînement, en particulier le moteur à combustion interne (VKM), comportant une unité de commande de moteur, la détermination, en particulier le calcul, du couple d'embrayage respectif (M_{K}) étant effectuée par l'unité de commande de moteur, en particulier la détermination, en particulier le calcul, du couple d'embrayage (M_{K}) et la détermination de la pression de fermeture (p) étant effectuées par l'unité de commande de moteur sur la base de la courbe caractéristique couple d'embrayage/pression de fermeture (K), en particulier l'adaptation de la courbe caractéristique couple d'embrayage/pression de fermeture (K) étant également effectuée par l'unité de commande de moteur.

7. Procédé selon l'une des revendications précédentes, le procédé étant conçu pour commander un embrayage de séparation (K0) de l'unité d'entraînement d'un véhicule automobile et/ou d'un véhicule utilitaire et/ou d'un véhicule de construction et/ou d'une machine agricole et/ou forestière.

8. Procédé selon l'une des revendications précédentes, le procédé étant conçu pour commander un embrayage (K0) de l'unité d'entraînement et/ou de la chaîne cinématique d'un véhicule hybride.
